# FASCICULE DE BREVET EUROPEEN

(11) **EP 0 574 309 B1**
(45) Date de publication et mention de la délivrance du brevet: **27.11.1996**
(21) Numéro de dépôt: 93401466.3
(22) Date de dépôt: 09.06.1993
(51) Int. Cl.: B60S 1/04

(54) **Module d'essuyage, notamment pour un pare-brise de véhicule automobile**
Wischermodul, insbesondere für die Windschutzscheibe eines Kraftfahrzeugs
Wiper module, in particular for the windscreen of a motor vehicle

(30) Priorité: 12.06.1992 FR 9207118
(43) Date de publication de la demande: 15.12.1993
(73) Titulaire: VALEO SYSTEMES D'ESSUYAGE, 78180 Montigny-Le-Bretonneux (FR)
(72) Inventeur: Eustache, Jean-Pierre, F-92160 Antony (FR)
(74) Mandataire: Gamonal, Didier

(56) Documents cités:
- EP-A- 0 443 934
- US-A- 4 988 144

## Description

La présente invention concerne un agencement pour l'essuyage et/ou le lavage d'une vitre de véhicule automobile, et notamment d'un pare-brise.

Les agencements connus comportent de nombreux organes et composants constitutifs d'un ou plusieurs essuie-glaces ainsi que d'un dispositif lave-glace permettant d'essuyer ou de laver la vitre chaque fois que cela est nécessaire.

L'assemblage, le montage et le raccordement de ces composants et organes sont particulièrement complexes, longs et coûteux.

Il a déjà été proposé dans le document FR-A-2.619.062 de réaliser une platine de support d'essuie-glace qui constitue une structure permettant de regrouper les différents organes et composants et notamment un palier pour un axe d'entraînement d'essuie-glace qui traverse la platine, des moyens de fixation d'une pompe de lave-glace et des moyens de fixation d'un moteur d'essuie-glace relié à l'arbre d'entraînement, la platine de support comportant des moyens pour sa fixation sur une partie de la caisse du véhicule et notamment sur le tablier d'auvent lorsque l'ensemble est prévu pour permettre le lavage et l'essuyage du pare-brise.

Ce sous-ensemble constitué par la platine support équipé de ces différents organes n'est pas entièrement satisfaisant du point de vue du montage sur le véhicule dans la mesure où il est livré par le fabricant d'équipements automobiles avec son ou ses essuie-glaces préalablement montés sur les bras d'entraînement afin de constituer un ensemble livré au constructeur automobile.

En vue de permettre son montage sur le véhicule, le constructeur doit procéder au démontage des bras d'essuie-glace, puis à la mise en place de la platine de support sur le tablier d'auvent, puis au remontage des bras d'essuie-glace en procédant alors au réglage le plus précis possible de la position des bras d'essuie-glaces, et des balais qu'ils portent, par rapport au pare-brise.

L'opération de montage et de fixation de la platine support est complexe car elle nécessite de faire pénétrer les extrémités des arbres d'entraînement à travers des orifices correspondants d'un élément de la structure de la caisse ou de la carosserie du véhicule automobile.

Les opérations de remontage et de réglage en position des bras sont également complexes et nécessitent une main d'oeuvre d'une grande habileté.

Afin de remédier à ces inconvénients, l'invention propose un module d'essuyage pour une vitre de véhicule automobile comportant des organes d'entraînement d'au moins un bras d'essuie-glace qui sont agencés sur une platine de support qui comporte des moyens pour permettre sa fixation sur une portion de la caisse du véhicule, et au moins un bras d'essuie-glace équipé de son balai d'essuie-glace en position sur l'extrémité libre d'un arbre d'entraînement monté à rotation dans un palier de guidage de la platine de support, caractérisé en ce que le module d'essuyage comporte un élément d'habillage qui comporte au moins une face supérieure sensiblement continue qui est traversée par l'extrémité de l'arbre d'entraînement sur laquelle le bras d'essuie-glace est en position à l'extérieur de l'élément d'habillage.

Grâce à cette conception, c'est l'ensemble du module d'essuyage ainsi constitué qui est livré par le fabricant d'équipement automobile au constructeur du véhicule qui monte l'ensemble du module sur le véhicule sans avoir à procéder au démontage préalable, puis au remontage, de l'essuie-glace.

Selon des modes de réalisation de l'invention :
- l'élément d'habillage comporte une face supérieure qui s'étend sur la totalité de la face supérieure de la platine de support et une paroi latérale qui entoure le pourtour de la platine de support ;
- la face supérieure de l'élément d'habillage comporte des moyens amovibles de maintien en place du bras d'essuie-glace dans une position de transport lors des opérations de transport et/ou de manutention du module d'essuyage ;
- les moyens de maintien comportent au moins un cavalier en forme de U inversé dont les extrémités des branches comportent des moyens d'accrochage sur la face supérieure de l'élément d'habillage ;
- les moyens de maintien comportent une cale de positionnement en hauteur du bras d'essuie-glace interposées entre la face supérieure de l'élément d'habillage et une portion en vis-à-vis du bras d'essuie-glace ;
- le module comporte au moins une butée démontable avec laquelle coopère une portion du bras d'essuie-glace ou du balai d'essuie-glace pour définir une orientation angulaire du bras d'essuie-glace par rapport au module d'essuyage en vue de la mise en place et de la fixation du module d'essuyage sur le véhicule ;
- le module d'essuyage comporte divers composants d'un circuit de lavage d'un pare-brise agencés sur la platine de support, ces composants comportant au moins un gicleur d'aspersion de la vitre qui fait saillie sur la face extérieure de l'élément d'habillage ;
- l'extrémité libre de l'axe d'entraînement du bras d'essuie-glace comporte des moyens de serrage permettant de modifier la position angulaire du bras d'essuie-glace par rapport à l'axe d'entraînement.

D'autres caractéristiques et avantages de l'invention apparaitront à la lecture de la description détaillée pour la compréhension de laquelle on se reportera aux dessins annexés dans lesquels :
- La figure 1 est une vue schématique en perspective d'un exemple de réalisation d'un module d'essuyage et de lavage selon l'invention ;
- la figure 2 est une vue schématique en perspective illustrant un mode de réalisation d'une variante d'un module d'essuyage ; et
- la figure 3 est une vue de détail en section selon la ligne 3-3 de la figure 1.

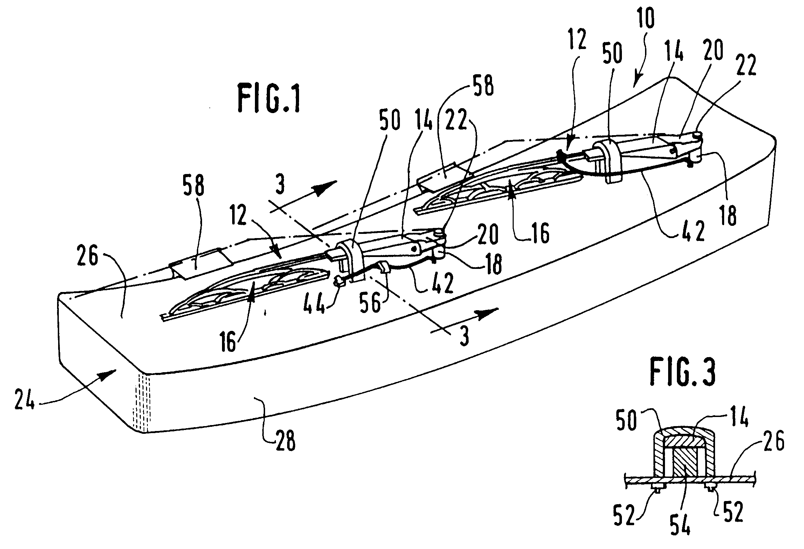

On a illustré à la figure 1 un module d'essuyage et/ou de lavage 10 prévu pour être monté sur un véhicule automobile dont il permet d'assurer l'essuyage et/ou le lavage du pare-brise.

Le module 10 comporte deux essuie-glaces 12 comportant chacun un bras d'essuie-glace 14 qui porte un balai d'essuie-glace 16 et qui est entraîné en mouvements alternatifs par un arbre d'entraînement 18.

La tête d'entraînement 20 de chacun des bras d'essuie-glace 14 est montée sur l'extrémité libre de l'arbre d'entraînement 18 sur laquelle elle est serrée dans une position angulaire déterminée, par exemple au moyen d'un écrou 22.

Le module d'essuyage 10 comporte un élément d'habillage 24 qui, dans le mode de réalisation illustré à la figure 1, est constitué par une plaque supérieure sensiblement plane 26 et par une paroi latérale 28.

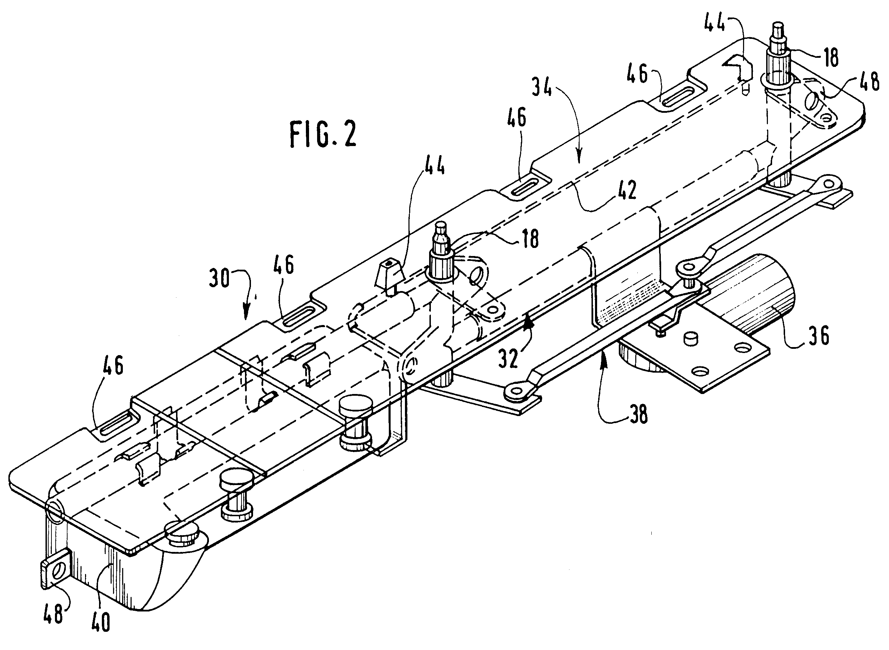

L'élément d'habillage 24 entoure et masque une platine de support qui est illustrée en détail à la figure 2 et qui est constituée par un châssis tubulaire 32.

La platine de support 32 porte notamment un moteur d'essuie-glace 36 qui, par l'intermédiaire d'une tringlerie 38 entraîne en mouvement alternatif de rotation les deux arbres d'entraînement 18.

La platine de support 32 reçoit également un réservoir 40 de liquide de lave-glace qui est relié par des canalisations 42 à des gicleurs d'aspersion 44.

Les conduits 42 traversent la face supérieure 26 de l'élément d'habillage 24 et les gicleurs 44 sont agencés à leur extrémité libre de manière à pouvoir être fixés sur le bras d'essuie-glace comme cela est illustré à la partie droite de la figure 1.

Les moyens de fixation de la platine de support 32 et des organes et composants qui lui sont fixés, sur la structure de la caisse du véhicule automobile sont constitués par différentes pattes 48 formées sur des composants du châssis.

C'est l'ensemble de la platine de support 32 et des éléments qui y sont fixés qui est habillé par l'élément d'habillage 24, les extrémités libres 19 des arbres d'entraînement 18 des essuie-glaces 12 traversant la face supérieure 26 de l'élément d'habillage 24.

Le module d'essuyage 10 illustré à la figure 1 est représenté dans sa position de transport et de manutention.

Les essuie-glaces 12 y sont maintenus dans une position dite de transport dans laquelle ils s'étendent sensiblement dans la partie médiane de la plaque supérieure 26 de l'élément d'habillage 24.

Ils sont maintenus dans cette position au moyen de cavaliers en forme de U inversé 50 qui, comme on peut le voir notamment à la figure 3, chevauchent une portion correspondante du bras d'essuie-glace 14.

Les extrémités libres 52 des branches des cavaliers 50 sont emboîtées élastiquement dans la plaque supérieure 26 de l'élément d'habillage 24 de manière à pouvoir être démontées facilement.

Il est également prévu une cale 54 qui détermine la position en hauteur du bras d'essuie-glace 14 par rapport à la plaque supérieure 26.

Chaque cale 54 est interposée entre la plaque supérieure 26 et une partie correspondante du bras d'essuie-glace 14.

De la même manière, il est possible de prévoir des cavaliers 56 pour le maintien en position des conduites 42 sur l'élément d'habillage 24.

Avant de procéder au montage et à la fixation du module 10 sur le véhicule, l'opérateur amène les essuie-glaces 12 dans une position dite de montage qui correspondra à leur position de repos lorsque l'ensemble sera en place sur le véhicule.

A cet effet, le module d'essuyage 10 comporte des butées amovibles 58 qui font saillie à la partie supérieure de l'élément d'habillage 24.

Après avoir ôté les cavaliers de maintien 50, l'opérateur modifie la position angulaire de chacun des essuie-glaces 12 de manière à amener une portion du balai d'essuie-glace 16 en contact avec la butée en vis-à-vis 58.

Chaque essuie-glace 12 ayant ainsi été réglé avec une orientation déterminée, par exemple par rapport à un référentiel représentant le bord inférieur de la vitre, l'opérateur procède au serrage définitif en position de la tête d'entraînement 20 sur l'arbre d'entraînement 18, et ceci indépendamment de toute autre référence géométrique prise sur le véhicule.

L'opérateur n'a plus alors qu'à démonter les butées amovibles 58 de manière à disposer d'un module d'essuyage 10 prêt à monter et à fixer sur le véhicule grâce aux moyens de fixation de la platine de support 32.

Différentes variantes du module d'essuyage peuvent être envisagées sans sortir du cadre de la présente invention.

Notamment et en se référant à la figure 2, l'élément d'habillage 24 peut être remplacé par une simple plaque 30 présentant au niveau de son bord longitudinal 34 des pattes 46 qui seront utilisées comme moyens de fixation sur le véhicule.

L'invention trouve à s'appliquer dans le cas d'un module d'essuyage à un seul essuie-glace 12.

## Revendications

1. Module d'essuyage (10) pour une vitre de véhicule automobile comportant des organes d'entraînement d'au moins un bras d'essuie-glace (14) qui sont agencés sur une platine de support (32) qui comporte des moyens pour permettre sa fixation sur une portion de la caisse du véhicule, et au moins un bras d'essuie-glace (14) équipé de son balai d'essuie-glace (16) en position sur l'extrémité libre d'un arbre d'entraînement (18) monté à rotation dans un palier de guidage de la platine de support (32), caractérisé en ce que le module comporte un élément d'habillage (24) qui comporte au moins une plaque supérieure (26,30) sensiblement continue qui est traversée par l'extrémité de l'arbre d'entraînement (18) sur laquelle le bras d'essuie-glace (14) est en position à l'extérieur de l'élément d'habillage (24).

2. Module d'essuyage selon la revendication 1, caractérisé en ce que l'élément d'habillage (24) comporte une face supérieure (26) qui s'étend sur la totalité de la face supérieure de la platine de support (30) et une paroi latérale (28) qui entoure le pourtour de la platine de support (32).

3. Module d'essuie-glace selon l'une des revendications 1 ou 2, caractérisé en ce qu'il comporte des moyens de fixation (46) sur le véhicule.

4. Module d'essuyage selon l'une des revendications 1 ou 2, caractérisé en ce que la face supérieure de l'élément d'habillage comporte des moyens amovibles (50) de maintien en place du bras d'essuie-glace (14) dans une position de transport lors des opérations de transport et/ou de manutention du module d'essuyage (10).

5. Module d'essuyage selon la revendication 4, caractérisé en ce que lesdits moyens de maintien comportent un cavalier en forme de U (50) inversé dont les extrémités (52) des branches comportent des moyens d'accrochage sur la face supérieure (26) de l'élément d'habillage (24).

6. Module d'essuyage selon l'une des revendications 3 à 5, caractérisé en ce que les moyens de maintien comportent une cale (54) de positionnement en hauteur interposée entre la face supérieure (26,30) de l'élément d'habillage (24) et une portion en vis-à-vis du bras d'essuyage (14).

7. Module d'essuyage selon l'une quelconque des revendications 1 à 6, caractérisé en ce qu'il comporte au moins une butée démontable (58) avec laquelle coopère une portion du bras d'essuie-glace (14) ou du balai d'essuie-glace (16) pour définir une orientation du bras d'essuie-glace (14).

8. Module d'essuyage selon l'une quelconque des revendications précédentes, caractérisé en ce qu'il comporte des composants d'un circuit de lavage de la vitre agencés sur la platine de support (32).

9. Module d'essuyage selon l'une quelconque des revendications 1 à 8, caractérisé en ce que lesdits composants comportent au moins un gicleur (44) d'aspersion de la vitre qui fait saillie sur la face supérieure (26,30) de l'élément d'habillage (24).

10. Module d'essuyage selon l'une quelconque des revendications précédentes, caractérisé en ce que l'extrémité libre de l'arbre d'entraînement (18) du bras d'essuie-glace (14) comporte des moyens (22) de serrage permettant de modifier la position angulaire du bras d'essuie-glace (14) par rapport à l'axe d'entraînement (18).

## Claims

1. Wiper unit (10) for the window of a motor vehicle, having means of driving at least one wiper arm (14) which are arranged on a support plate (32) which has means for fixing it on a part of the body of the vehicle, and at least one wiper arm (14) equipped with its wiper (16) in position on the free end of a drive shaft (18) mounted so as to rotate in a guide bearing of the support plate (32), characterised in that the unit has a covering element (24) which includes at least one substantially continuous top plate (26, 30) through which passes the end of the drive shaft (18) on which the wiper arm (14) is in position outside the covering element (24).

2. Wiper unit according to Claim 1, characterised in that the covering element (24) has a top face (26) which extends over the whole of the top face of the support plate (30) and a side wall (28) which surrounds the periphery of the support plate (32).

3. Wiper unit according to one of Claims 1 or 2, characterised in that it has means of fixing (46) on the vehicle.

4. Wiper unit according to one of Claims 1 or 2, characterised in that the top face of the covering element has removable means (50) for holding the wiper arm (14) in place in a position of transport during operations of transporting and/or handling the wiper unit (10).

5. Wiper unit according to Claim 4, characterised in that the said holding means include a bracket in the form of an inverted U (50), the ends (52) of whose arms have means of hooking onto the top face (26) of the covering element (24).

6. Wiper unit according to one of Claims 3 to 5, characterised in that the holding means include a height-adjustment block (54) interposed between the top face (26, 30) of the covering element (24) and an opposite portion of the wiper arm (14).

7. Wiper unit according to any one of Claims 1 to 6, characterised in that it includes at least one removable stop (58) with which a portion of the wiper arm (14) or wiper (16) cooperates to define an orientation of the wiper arm (14).

8. Wiper unit according to any one of the preceding claims, characterised in that it includes components of a window washing circuit arranged on the support plate (32).

9. Wiper unit according to any one of Claims 1 to 8, characterised in that the said components include at least one nozzle (44) for spraying the window which projects above the top face (26, 30) of the covering element (24).

10. Wiper unit according to any one of the preceding claims, characterised in that the free end of the drive shaft (18) of the wiper arm (14) has clamping means (22) for changing the angular position of the wiper arm (14) with respect to the drive shaft (18).

## Patentansprüche

1. Wischermodul (10) für eine Kraftfahrzeugscheibe, umfassend Antriebsorgane für wenigstens einen Scheibenwischerarm (14), die an einer Tragplatte (32) angeordnet sind, welche Mittel für ihre Befestigung an einem Teil des Fahrzeugaufbaus umfassen, und wenigstens einen mit seinem Scheibenwischerblatt (16) bestückten Scheibenwischerarm (16) in seiner Position am freien Ende einer Antriebswelle (18), die drehbar in einem Führungslager der Tragplatte (32) gelagert ist , **dadurch gekennzeichnet,** daß das Wischermodul ein Verkleidungselement (24) umfaßt, das wenigstens eine in etwa durchgehende obere Platte (26, 30) aufweist, durch die das Ende der Antriebswelle (18) hindurchgeht, an dem der Scheibenwischerarm (14) in einer Position außerhalb des Verkleidungselements (24) angebracht ist.

2. Wischermodul nach Anspruch 1 , **dadurch gekennzeichnet,** daß das Verkleidungselement (24) eine Oberseite (26), die sich über die gesamte Oberseite der Tragplatte (30) erstreckt, und eine Seitenwand (32) umfaßt, die den Umfang der Tragplatte (32) umschließt.

3. Wischermodul nach einem der Ansprüche 1 oder 2, **dadurch gekennzeichnet,** daß es Mittel (46) für die Befestigung am Fahrzeug umfaßt.

4. Wischermodul nach einem der Ansprüche 1 oder 2, **dadurch gekennzeichnet,** daß die Oberseite des Verkleidungselements abnehmbare Mittel (50) zur Halterung des Scheibenwischerarms (14) in einer Transportpostion während der Vorgänge zum Transportieren und/oder Verladen des Wischermoduls (10) umfaßt.

5. Wischermodul nach Anspruch 4 , **dadurch gekennzeichnet,** daß die Halterungsmittel wenigstens einen Bügel in umgekehrter U-Form (50) umfassen, dessen Schenkelenden (52) Mittel für das Einsetzen an der Oberseite (26) des Verkleidungselements (24) aufweisen.

6. Wischermodul nach einem der Ansprüche 3 bis 5, **dadurch gekennzeichnet,** daß die Halterungsmittel einen Keil (54) für die Höhenpositionierung umfassen, der zwischen der Oberseite (26, 30) des Verkleidungselements (24) und einem gegenüberliegenden Teilstück des Scheibenwischerarms (14) eingefügt ist.

7. Wischermodul nach einem der Ansprüche 1 bis 6, **dadurch gekennzeichnet**, daß es wenigstens einen abnehmbaren Anschlag (58) umfaßt, mit dem ein Teilstück des Scheibenwischerarms (14) oder des Scheibenwischerblatts (16) zusammenwirkt, um eine Winkelausrichtung des Scheibenwischerarms (14) zu definieren.

8. Wischermodul nach einem der vorangehenden Ansprüche, **dadurch gekennzeichnet,** daß es Bauteile eines Scheibenwaschsystems umfaßt, die auf der Tragplatte (32) angeordnet sind.

9. Wischermodul nach einem der Ansprüche 1 bis 8, **dadurch gekennzeichnet,** daß die besagten Bauteile wenigstens eine Spritzdüse (44) für das Bespritzen der Scheibe umfassen, die an der Oberseite (26, 30) des Verkleidungselements (24) vorspringt.

10. Wischermodul nach einem der vorangehenden Ansprüche, **dadurch gekennzeichnet,** daß das freie Ende der Antriebswelle (18) des Scheibenwischerarms (14) Klemmittel (22) umfaßt, um die Winkelposition des Scheibenwischerarms (14) im Verhältnis zur Antriebsachse (18) verändern zu können.
